# EUROPÄISCHE PATENTANMELDUNG

(11) **EP 4 696 129 A2**
(43) Veröffentlichungstag der Anmeldung: **18.02.2026**
(21) Anmeldenummer: 25187174.5
(22) Anmeldetag: 03.07.2025
(51) Int. Cl.: A01F 12/44

(54) **MÄHDRESCHER**

(30) Priorität: 12.08.2024 DE 102024122917
(71) Anmelder: CLAAS Selbstfahrende Erntemaschinen GmbH, 33428 Harsewinkel (DE)
(72) Erfinder: Vieregge, Christopher, 32694 Dörentrup (DE); Beckmann, Hermann-Konstantin, 32584 Löhne (DE); Diekamp, Andreas, 49176 Hilter (DE); Lehmberg, Andreas, 33428 Harsewinkel (DE); Pickhinke, Paul, 48361 Beelen (DE); Pölling, Benedikt, 48653 Coesfeld (DE); Ackfeld, Lukas, 59329 Wadersloh (DE); Taucher, Christian, 31737 Rinteln (DE); Brandmeier, Jonas, 33428 Harsewinkel (DE)
(74) Vertreter: CLAAS Gruppe

(57) **Zusammenfassung**

Die vorliegende Erfindung betrifft einen Mähdrescher (1), umfassend eine Dreschvorrichtung (2), eine Abscheidevorrichtung (3) sowie eine Reinigungsvorrichtung (4), welche Siebe (10) sowie eine den Sieben (10) der Reinigungsvorrichtung (4) nachgeordnete Sauggebläseanordnung (12) mit zumindest einem Sauggebläse (13) aufweist, wobei die Sauggebläseanordnung (12) ein Gehäuse (14) aufweist, in welchem ein Läufer (19a, 19b) des zumindest einen Sauggebläses (13) um eine vertikale Rotationsachse (15) rotiert, um einen Saugluftstrom (11) aus einem zumindest die Reinigungsvorrichtung (4) umgebenden Prozessraum (17) des Mähdreschers (1) anzusaugen, welcher die Siebe (10) durchströmt, wobei die Sauggebläseanordnung (12) einen aus dem zumindest einen Sauggebläse (13) austretenden Luft- und Erntegutstrom einem Auswurfkanal (18) zuführt, wobei in einer dem Auswurfkanal (14) zugewandten Rückwand (36) des Gehäuses (14) zumindest eine Bypassöffnung (37) mit variabler Öffnungsweite integriert ist.

## Beschreibung

Die vorliegende Erfindung betrifft einen Mähdrescher gemäß dem Oberbegriff des Anspruches 1.

Ein Mähdrescher der eingangs genannten Art ist aus der DE 10 2022 102 795 A1 bekannt. Der Mähdrescher weist eine Dreschvorrichtung, eine Abscheidevorrichtung sowie eine Reinigungsvorrichtung auf, welche Siebe sowie eine den Sieben der Reinigungsvorrichtung nachgeordnete Sauggebläseanordnung mit zumindest einem Sauggebläse umfasst, wobei die Sauggebläseanordnung ein Gehäuse aufweist, in welchem ein Läufer des zumindest einen Sauggebläses um eine vertikale Achse rotiert, um einen Saugluftstrom aus einem zumindest die Reinigungsvorrichtung umgebenden Prozessraum des Mähdreschers anzusaugen, welcher die Siebe durchströmt. Von der Reinigungsvorrichtung abgeschiedene Nichtkornbestandteile, insbesondere Spreu, Kurzstroh oder dergleichen, werden dabei vom Saugluftstrom mitgeführt und durchströmen die Sauggebläseanordnung, um im rückwärtigen Bereich des Mähdreschers ausgeschieden zu werden. Dies erfolgt unmittelbar durch die Sauggebläseanordnung, welche die angesaugten Nichtkornbestandteile durch einen Auswurfkanal ausbringt. In Abhängigkeit von der Erntegutart kann es bei der Reinigung von besonders leichten Früchten, beispielsweise Grassamen, zu einem Zielkonflikt zwischen auftretenden Erntegutverlusten durch das Absaugen der Früchte zusammen mit den Nichtkornbestandteilen und, bei einer Reduzierung der Drehzahl der Läufer zur Reduzierung von Absaugverlusten, einer unzureichenden Auswurfweite und Auswurfqualität des auf dem Feld auszubringenden, aus Nichtkornbestandteilen bestehenden Restgutstrom kommen.

Ausgehend vom vorstehend genannten Stand der Technik liegt der Erfindung die Aufgabe zugrunde, einen Mähdrescher der eingangs genannten Art weiterzubilden, welcher die aus dem Zielkonflikt resultierenden Nachteile vermeidet oder zumindest reduziert.

Diese Aufgabe wird erfindungsgemäß durch einen selbstfahrenden Mähdrescher mit den Merkmalen des Anspruches 1 gelöst. Vorteilhafte Weiterbildungen sind Gegenstand der abhängigen Ansprüche.

Gemäß dem Anspruch 1 wird ein Mähdrescher vorgeschlagen, umfassend eine Dreschvorrichtung, eine Abscheidevorrichtung sowie eine Reinigungsvorrichtung, welche Siebe sowie eine den Sieben der Reinigungsvorrichtung nachgeordnete Sauggebläseanordnung mit zumindest einem Sauggebläse aufweist, wobei die Sauggebläseanordnung ein Gehäuse aufweist, in welchem ein Läufer des zumindest einen Sauggebläses um eine vertikale Achse rotiert, um einen Saugluftstrom aus einem zumindest die Reinigungsvorrichtung umgebenden Prozessraum des Mähdreschers anzusaugen, welcher die Siebe durchströmt, wobei die Sauggebläseanordnung einen aus dem zumindest einen Sauggebläse austretenden Luft- und Erntegutstrom einem Auswurfkanal zuführt. Erfindungsgemäß ist vorgesehen, dass in einer dem Auswurfkanal zugewandten Rückwand des Gehäuses der Sauggebläseanordnung zumindest eine Bypassöffnung mit variabler Öffnungsweite integriert ist.

Die zumindest eine Bypassöffnung ermöglicht es, durch eine Variation der Öffnungsweite einen Bypassluftstrom anzusaugen, wodurch bei unveränderter Drehzahl des Läufers des zumindest einen Sauggebläses der die Siebe durchströmende Saugluftstrom anteilig reduziert wird. Dies hat den Effekt, dass das Auftreten von Erntegutverlusten durch das Absaugen der Früchte minimiert. Zugleich kann die Auswurfweite und Auswurfqualität aufrechterhalten werden, da die Strömungsgeschwindigkeit und der von der Sauggebläseanordnung geförderte Gesamtvolumenstrom im Wesentlichen konstant gehalten werde kann.

Unter einer variablen Öffnungsweite der zumindest einen in die Rückwand des Gehäuses integrierten Bypassöffnung ist sowohl eine schrittweise Veränderung der Öffnungsweite als auch eine kontinuierliche Veränderung der Öffnungsweite der zumindest einen Bypassöffnung zu verstehen. Bei einer schrittweisen Veränderung der Öffnungsweite kann die Schrittweite gleichmäßig, beispielsweise proportional, oder ungleichmäßig, beispielsweise unterproportional oder überproportional, sein.

Insbesondere kann jedem Sauggebläse zumindest eine Bypassöffnung zugeordnet sein. Bevorzugt weist die Sauggebläseanordnung zumindest zwei nebeneinander angeordnete Sauggebläse auf. Bevorzugt können die zumindest zwei Sauggebläse durch ein gemeinsames Gehäuse abschnittsweise umschlossen sein. Denkbar ist auch, dass jedes Sauggebläse durch ein separates Gehäuse umschlossen sein kann.

Bevorzugt kann die Öffnungsweite der zumindest einen Bypassöffnung manuell oder automatisch veränderbar sein.

Gemäß einer bevorzugten Weiterbildung kann die zumindest eine Bypassöffnung durch zumindest ein lösbar an der Rückwand angeordnetes Verschlusselement und/oder durch zumindest eine an der Rückwand angeordnete, relativ zur Rückwand bewegliche Verschlussblende verschlossen sein. Das zumindest eine lösbar an der Rückwand angeordnete Verschlusselement kann manuell demontierbar und montierbar sein, um die Öffnungsweite der zumindest einen Bypassöffnung zu verändern. Die zumindest eine an der Rückwand angeordnete Verschlussblende kann manuell betätigbar ausgeführt sein, um die Öffnungsweite der zumindest einen Bypassöffnung zu verändern. Die Verschlussblende kann beispielsweise Lamellenblende ausgeführt sein, welche eine schrittweise oder kontinuierliche Veränderung der Öffnungsweite der zumindest einen Bypassöffnung ermöglicht.

Insbesondere kann die Rückwand des Gehäuses zumindest einen halbschalenförmigen Abschnitt aufweisen, welcher sich oberhalb des Auswurfkanals in im Wesentlichen vertikaler Richtung erstreckt und das zumindest eine Sauggebläse abschnittsweise in Umfangsrichtung umgibt, und ein sich an den halbschalenförmigen Abschnitt anschließendes Deckelsegment, welches gegenüber der vertikalen Achse des Sauggebläses geneigt ausgeführt ist und sich abschnittsweise oberhalb des Sauggebläses über dieses erstreckt.

Bevorzugt kann die zumindest eine Bypassöffnung in dem zumindest einen Deckelsegment der Rückwand des Gehäuses ausgebildet sein. Die Ansaugung des Bypassluftstroms durch die zumindest eine Bypassöffnung in dem zumindest einen Deckelsegment erfolgt entsprechend der Neigung des Deckelsegmentes gegenüber der vertikalen Achse des Sauggebläses.

Zusätzlich oder alternativ kann die zumindest eine Bypassöffnung in dem zumindest einen halbschalenförmigen Abschnitt der Rückwand des Gehäuses ausgebildet sein. Die Ansaugung des Bypassluftstroms durch die zumindest eine Bypassöffnung in dem zumindest einen halbschalenförmigen Abschnitt erfolgt, bezogen auf eine Rotationsachse des zumindest einen Sauggebläses, im Wesentlichen in radialer Richtung.

Insbesondere kann das zumindest eine Verschlusselement lösbar an dem Deckelsegment oder zum Deckelsegment relativbeweglich angeordnet sein, um die Öffnungsweite zu variieren.

Gemäß einer Weiterbildung kann das zumindest eine Verschlusselement durch Befestigungsmittel, insbesondere Schraubverbindungen, mit dem Deckelsegment lösbar verbunden sein.

Für eine zum Deckelsegment relativbewegliche Anordnung des zumindest einen Verschlusselementes und/oder der zumindest einen Verschlussblende können beispielsweise zueinander parallele Führungsschienen auf der Oberseite des Deckelsegmentes angeordnet sein, die eine Verschiebung des zumindest einen Verschlusselementes relativ zum Deckelsegment zur zumindest abschnittsfreien Freigabe der Bypassöffnung ermöglichen. Die Verschiebung kann manuell oder automatisch durch einen Aktuator erfolgen. Eine weitere Alternative bildet die Verschlussblende, welche manuell oder durch einen Aktuator automatisch verstellbare Blendensegmente aufweist.

Insbesondere kann das zumindest ein Verschlusselement umfassende Deckelsegment gemeinsam mit dem zumindest einen Verschlusselement von dem halbschalenförmigen Abschnitt lösbar sein. Bevorzugt kann das Deckelsegment durch als Schraubverbindungen ausgeführte Befestigungsmittel mit dem halbschalenförmigen Abschnitt des Gehäuses lösbar verbunden sein.

Bevorzugt kann das zumindest eine Verschlusselement lösbar an dem zumindest einen halbschalenförmigen Abschnitt oder zum zumindest einen halbschalenförmigen Abschnitt relativbeweglich angeordnet sein, um die Öffnungsweite zu variieren. Auch hier kann im einfachsten Fall das zumindest eine Verschlusselement durch als Schraubverbindungen ausgeführte Befestigungsmittel mit dem halbschalenförmigen Abschnitt des Gehäuses lösbar verbunden sein.

Gemäß einer bevorzugten Weiterbildung kann vorgesehen sein, dass auf dem zumindest einen Verschlusselement ein weiteres Verschlusselement zur Freigabe einer Bypassöffnung lösbar angeordnet ist, welches eine kleinere Oberfläche aufweist.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung eines Mähdreschers in einer Teilansicht;
- Fig. 2: schematisch und exemplarisch eine Sauggebläseanordnung des Mähdreschers in einer perspektivischen Ansicht von hinten;
- Fig. 3: schematisch und exemplarisch eine Teilansicht eines Gehäuses der Sauggebläseanordnung gemäß Fig. 2 mit verschlossenen Bypassöffnungen;
- Fig. 4: schematisch und exemplarisch eine Teilansicht des Gehäuses gemäß Fig. 3 mit freigegebenen Bypassöffnungen in Deckelsegmenten des Gehäuses;
- Fig. 5: schematisch und exemplarisch eine Ansicht des Gehäuses gemäß Fig. 3 mit durch Entfernen der Deckelsegmente freigegebenen Bypassöffnungen; und
- Fig. 6: schematisch und exemplarisch eine Ansicht des Gehäuses gemäß Fig. 3 mit durch Entfernen der Deckelsegmente und von Verschlusselementen an halbschalenförmigen Abschnitten des Gehäuses freigegebenen Bypassöffnungen.

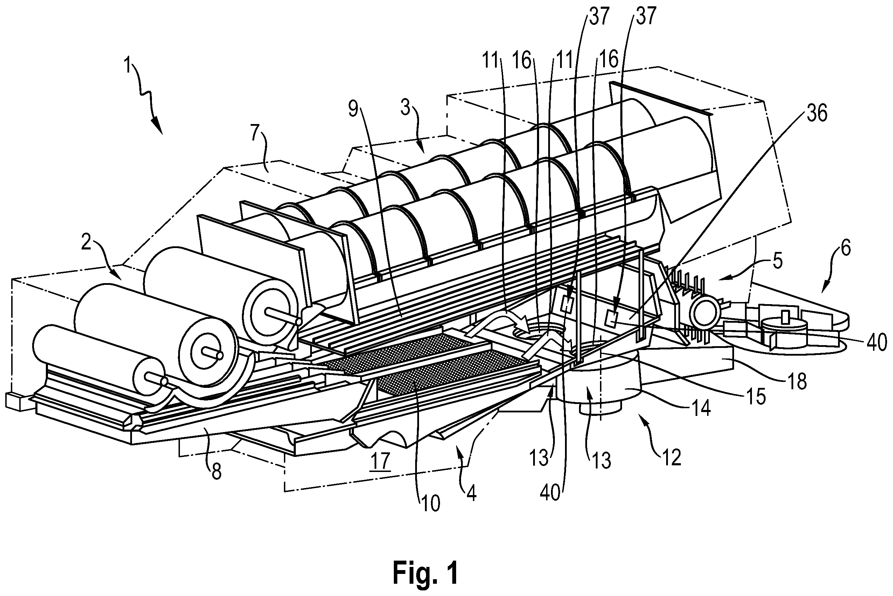

In Fig. 1 ist schematisch und exemplarisch eine Darstellung eines Mähdreschers 1 in einer Teilansicht gezeigt. Der Mähdrescher 1 umfasst eine Dreschvorrichtung 2, die hier und vorzugsweise als ein Mehrtrommeldreschwerk ausgeführt ist, eine Abscheidevorrichtung 3, die im dargestellten Ausführungsbeispiel zumindest einen als nach dem Axialflussprinzip arbeitenden Trennrotor aufweist, eine Reinigungsvorrichtung 4, eine Häckselvorrichtung 5 sowie eine Verteilvorrichtung 6, die als Radialverteiler ausgeführt ist. Die Dreschvorrichtung 2, die Abscheidevorrichtung 3, die Reinigungsvorrichtung 4 sowie die Häckselvorrichtung 5 sind zumindest teilweise von einem - strichliniiert dargestellten - Maschinengehäuse 7 umgeben. Unterhalb der Dreschvorrichtung 2 ist ein oszillierend angetriebener Vorbereitungsboden 8 angeordnet. Unterhalb der Abscheidevorrichtung 3 ist ein ebenfalls oszillierend angetriebener Rücklaufboden 9 angeordnet, der im Wesentlichen parallel zu der Abscheidevorrichtung 3 verläuft. Die Reinigungsvorrichtung 4 umfasst zumindest zwei als zumindest ein Obersieb und zumindest ein Untersieb ausgeführte Siebe 10. Der Vorbereitungsboden 8 liegt oberhalb der Siebebene der Reinigungsvorrichtung 4. Der Reinigungsvorrichtung 4 ist eine Sauggebläseanordnung 12 mit zumindest einem Sauggebläse 13 nachgeordnet. Hier und vorzugsweise weist die Sauggebläseanordnung 12 zwei Sauggebläse 13 auf, welche als Reinigungsgebläse der Reinigungsvorrichtung 4 dienen. Die Sauggebläseanordnung 12 weist zumindest ein Gehäuse 14 auf, in welchem ein Läufer 19a, 19b des zumindest einen Sauggebläses 13 um eine vertikale Rotationsachse 15 rotiert, um einen Saugluftstrom 11 durch Öffnungen aus einem Prozessraum 17 des Mähdreschers 1 anzusaugen. Der Prozessraum 17 ist durch das Maschinengehäuse 7 zumindest teilweise umschlossen. Dabei trennt der Prozessraum 17 die darin angeordneten Arbeitsorgane zur Bearbeitung des aufgenommenen Erntegutes von anderen Arbeitsaggregaten, wie beispielsweise dem Antriebstrang, der einen als Verbrennungsmotor ausgeführten Antriebsmotor umfasst, oder anderen Baugruppen, wie einen Korntank des Mähdreschers 1.

In dem Prozessraum 17 sind die Dreschvorrichtung 2, die Abscheidevorrichtung 3, die Reinigungsvorrichtung 4 sowie die Häckselvorrichtung 5 angeordnet. Der dem Prozessraum 17 entnommene Saugluftstrom 11 durchströmt dabei unter anderem die Siebe 10 der Reinigungsvorrichtung 4. An das zumindest eine Gehäuse 14 der Sauggebläseanordnung 12 kann sich ein Auswurfkanal 18 anschließen. Das zumindest eine Sauggebläse 13 der Sauggebläseanordnung 12 saugt einen Luft- und Gutstrom als Saugluftstrom 11 an, der im Wesentlichen im Bereich der Dreschvorrichtung 2 sowie der Reinigungsvorrichtung 4 als auch unterhalb des Vorbereitungsbodens 8 zugeführt wird, und leitet diesen nach dem Um- und Durchströmen des Vorbereitungsbodens 8 und der Reinigungsvorrichtung 4 durch den Auswurfkanal 18 nach außen. Die Sauggebläseanordnung 12 kann auch die Funktion der Verteilvorrichtung 6 übernehmen.

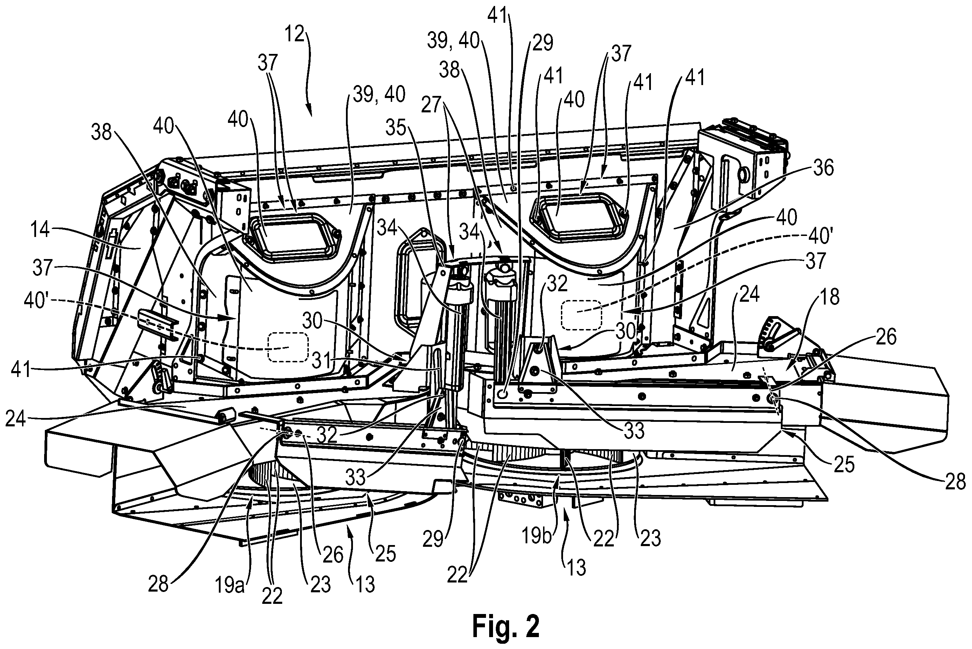

Die Darstellung in Fig. 2 zeigt schematisch und exemplarisch die Sauggebläseanordnung 12 des Mähdreschers 1 in einer perspektivischen Ansicht von hinten. Die Sauggebläseanordnung 12 übernimmt hier und vorzugsweise die Funktion des Reinigungsgebläses und eines Spreuverteilers. Die beiden in dem Gehäuse 14 nebeneinander angeordneten Sauggebläse 13 umfassen jeweils einen um die Rotationsachse 15 rotierenden Läufer 19a, 19b, die im Betrieb gegensinnig rotieren, wie durch Pfeile DR angedeutet. Die Läufer 19a, 19b sind mit mehreren radial orientierten Schaufeln 22 versehen, die der Förderung des von den Sauggebläsen 13 angesaugten Saugluftstrom 11 sowie eines von der Reinigungsvorrichtung 4 mitgeführten Restgutstromes dienen. Der vom Saugluftstrom 11 mitgeführte Restgutstrom umfasst im Wesentlichen Kurzstroh, Spreu und sonstige von der Reinigungsvorrichtung 4 abgeschiedene Bestandteile des gereinigten Erntegutes. Die Schaufeln 22 ragen von einer Grundplatte 23 der Läufer 19a, 19b im Wesentlichen vertikal auf. Die Läufer 19a, 19b sind durch zumindest eine zur Grundplatte 23 parallel angeordnete Abdeckung 24 obenseitig begrenzt.

Jedem Läufer 19a, 19b ist ein individuell schwenkbewegliches Gutleitelement 25 zugeordnet. Das jeweilige Gutleitelement 25 ist um eine zur Rotationsachse 15 der Läufer 19a, 19b im Wesentlichen senkrecht verlaufende Schwenkachse 26 schwenkbar. Das jeweilige Gutleitelement 25 erstreckt sich im Wesentlichen über die Breite respektive den Durchmesser des jeweiligen Läufers 19a, 19b. Den Gutleitelementen 25 ist jeweils eine Verstelleinrichtung 27 zugeordnet, welche zum unabhängigen Einstellen der Schwenkposition des Gutleitelementes 25 relativ zur Grundplatte 23 eingerichtet ist. Die Schwenkposition des Gutleitelementes 25 bestimmt den vertikalen Abstand der Unterkante des Gutleitelementes 25 zur Grundplatte 23.

Die Darstellung in Fig. 2 zeigt beispielhaft das dem Läufer 19a zugehörige Gutleitelement 25 in einer aktiven Position und das dem Läufer 19b zugehörige Gutleitelement 25 in einer passiven Position.

In der bespielhaft dargestellten aktiven Position des Gutleitelementes 25 befindet sich das Gutleitelement 25 in seiner untersten Stellung, sodass die Abgabe des von dem Läufer 19a geförderten Restgutstromes maximal beeinflusst wird. Es wird ein größerer Anteil des Restgutstromes seitlich nach außen abgelenkt.

In der passiven Position des Gutleitelementes 25 befindet sich das Gutleitelement 25 in seiner obersten Stellung, in welcher das Gutleitelement 25 nahezu keinen Einfluss auf die Abgabe des von dem Läufer 19b geförderten Restgutstromes hat.

Mittels der jeweiligen Verstelleinrichtung 27 lassen sich die Gutleitelement 25 stufenlos zwischen der untersten Stellung, der passiven Position des Gutleitelementes 25, und der obersten Stellung, der aktiven Position des Gutleitelementes 25, bewegen.

Das jeweilige Gutleitelement 25 ist mit einem Ende an der Abdeckung 24 in einem äußeren Gelenkpunkt 28 um die Schwenkachse 26 schwenkbar angelenkt und mit einem anderen Ende an einem inneren Gelenkpunkt 29 angelenkt. Die Position des inneren Gelenkpunktes 29 relativ zur Grundplatte 23 ist durch die Verstelleinrichtung 27 manuell oder, wie in Fig. 2 dargestellt, automatisiert in vertikaler Richtung verstellbar.

Das jeweilige Gutleitelement 25 ist im dargestellten Ausführungsbeispiel mit seinem äußeren Gelenkpunkt 28 an einem im Wesentlichen vertikal verlaufenden Schenkel eines Winkelelement 49 befestigt, welches mit seinem im Wesentlichen horizontal verlaufenden Schenkel mit der Abdeckung 24 verbunden ist.

Zur Führung der Schwenkbewegungen des jeweiligen Gutleitelementes 25 ist eine Führungseinrichtung 30 vorgesehen. Die jeweilige Führungseinrichtung 30 weist eine bogenförmige Führungsbahn 31 auf, in welcher das Gutleitelement 25 mit einem Führungselement 32 geführt ist. Das Führungselement 32 ist an einem im Bereich des inneren Gelenkpunktes 29 angeordneten Führungsabschnitt 33 am Gutleitelement 25 angeordnet. Das Führungselement 32 kann als Führungsrolle oder als Kulissenstein ausgeführt sein.

Zur automatisierten Verstellung des inneren Gelenkpunktes 29 relativ zur Grundplatte 23 ist ein Aktuator 34 vorgesehen, der hier und vorzugsweise als Linearaktuator ausgeführt ist. Der Linearaktuator kann hydraulisch, pneumatisch, elektrohydraulisch, elektropneumatisch oder elektromechanisch betreibbar ausgeführt sein.

Der Aktuator 34 ist von einer Halterung 35 aufgenommen, die auf der Oberseite der zumindest einen Abdeckung 24 oder oberhalb dieser angeordnet ist. Der jeweilige Aktuator 34 ist mit einem Ende an der Halterung 35 angelenkt und mit seinem anderen Ende am inneren Gelenkpunkt 29 des Gutleitelementes 25. Somit kann der jeweilige Aktuator 34 der durch die Führungseinrichtung 30 geführten Schwenkbewegung des Gutleitelementes 25 folgen. Die Gutleitelemente 25 können mittels der Aktuatoren 34 unabhängig voneinander pendelnd bzw. oszillierend bewegbar sein.

Den Verstelleinrichtungen 27 ist zumindest eine Steuereinheit zugeordnet ist, welche dazu eingerichtet ist, die Aktuatoren 34 der Verstelleinrichtungen 27 voneinander unabhängig anzusteuern. Bevorzugt kann die Ansteuerung der Verstelleinrichtungen 27 durch die zumindest eine Steuereinheit automatisiert erfolgen. Hierdurch kann die Sauggebläseanordnung 12 in ihrer Funktion als Spreuverteiler und/oder als Verteilvorrichtung in einen Automatisierungsprozess eingebunden werden. Der Automatisierungsprozess kann Betriebsparameter des Mähdreschers 1 sowie der Sauggebläseanordnung 12 berücksichtigen, um die Verteilung des Restgutstromes zu optimieren.

Das Gehäuse 14 der Sauggebläseanordnung 12 weist eine dem Auswurfkanal 14 zugewandte Rückwand 36 auf. In die Rückwand 36 des Gehäuses 14 ist zumindest eine Bypassöffnung 37 integriert, wie in Fig. 1 schematisch angedeutet. Hier und vorzugsweise ist jedem der beiden Sauggebläse 13 zumindest eine Bypassöffnung 37 zugeordnet.

Die Rückwand 36 des Gehäuses 14 weist zumindest einen halbschalenförmigen Abschnitt 38 auf, welcher sich oberhalb des Auswurfkanals 18 in im Wesentlichen vertikaler Richtung erstreckt. Der halbschalenförmige Abschnitt 38 umgibt das zumindest eine Sauggebläse 13 abschnittsweise in Umfangsrichtung. Hier und vorzugsweise weist die Rückwand 36 entsprechend der Anzahl der Sauggebläse 13 zwei halbschalenförmige Abschnitte 38 auf. An den jeweiligen halbschalenförmigen Abschnitt 38 schließt sich ein Deckelsegment 39 an, welches gegenüber der Rotationsachse 15 der Sauggebläse 13 geneigt ausgeführt ist und sich abschnittsweise oberhalb der Sauggebläses 13 über diese erstreckt.

Zumindest eine Bypassöffnung 37 ist in dem zumindest einen Deckelsegment 39 der Rückwand 36 des Gehäuses 14 ausgebildet. Zusätzlich oder alternativ ist die zumindest eine Bypassöffnung 37 in dem zumindest einen halbschalenförmigen Abschnitt 38 der Rückwand 36 des Gehäuses 12 ausgebildet.

Die zumindest eine Bypassöffnung 37 ist durch zumindest ein lösbar an der Rückwand 36 angeordnetes Verschlusselement 40 verschlossen. Alternativ oder zusätzlich kann das Verschlusselement 40 als relativ zur Rückwand 36 bewegliches Verschlusselement 40 ausgeführt sein.

Das zumindest eine Verschlusselement 40, welches die Bypassöffnung 37 des Deckelelementes 39 verschließt, kann durch als Schraubverbindungen 41 ausgeführte Befestigungsmittel mit dem Deckelsegment 39 lösbar verbunden sein. Das zumindest eine Verschlusselement 40, welches die Bypassöffnung 37 des halbschalenförmigen Abschnitts 38 verschließt, kann ebenfalls durch Schraubverbindungen 41 mit dem halbschalenförmigen Abschnitt 38 lösbar verbunden sein. Alternative Befestigungsmittel, durch welche das zumindest eine Verschlusselement 40 mit dem Deckelsegment 39 lösbar verbunden ist, sind denkbar.

Das zumindest ein Verschlusselement 40 umfassende Deckelsegment 39 ist gemeinsam mit dem zumindest einen Verschlusselement 40 von dem halbschalenförmigen Abschnitt 38 lösbar. Hierzu sind weitere Schraubverbindungen 41 vorgesehen, welche das Deckelsegment 39 lösbar mit dem halbschalenförmigen Abschnitt 38 verbinden. Auch hier sind alterative Befestigungsmittel denkbar.

Durch das Entfernen der Verschlusselemente 40 von den Bypassöffnungen 37 kann die Öffnungsweite der jeweiligen Bypassöffnungen 37 variiert werden. Im einfachsten Fall beträgt die Öffnungsweite bei einer durch das Verschlusselement 40 vollständig geschlossenen Bypassöffnung 37 0% und bei entferntem Verschlusselement 40 100%. Das Deckelsegment 39 bildet dabei zugleich ein weiteres Verschlusselement 40, welches durch das Entfernen von dem halbschalenförmigen Abschnitt 38 zur Variation der Öffnungsweite der jeweiligen Bypassöffnungen 37 beiträgt. Die Öffnungsweite der Bypassöffnung 37 entspricht dabei der Fläche des Deckelsegmentes 39.

Für eine flexiblere Variation der Öffnungsweite der zumindest einen Bypassöffnung 37 kann eine zum halbschalenförmigen Abschnitt 38 und/oder zum Deckelsegment 39 relativbewegliche Anordnung des jeweiligen Verschlusselement 40 vorgesehen sein. Bei einer relativbeweglichen Anordnung der Verschlusselemente 40 können diese manuell oder durch eine Aktuatorik automatisch bewegbar sein.

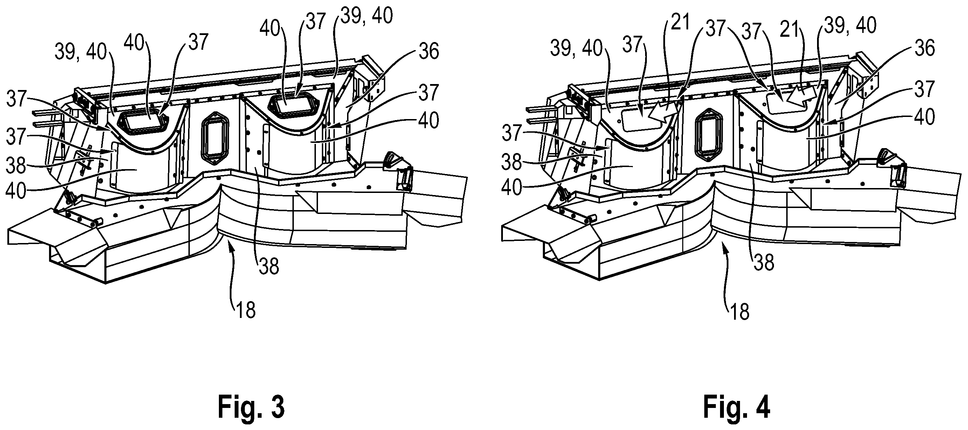

In Fig. 3 ist schematisch und exemplarisch eine Teilansicht eines Gehäuses 14 der Sauggebläseanordnung 12 gemäß Fig. 2 mit verschlossenen Bypassöffnungen 37 dargestellt.

Die Darstellung in Fig. 4 zeigt schematisch und exemplarisch eine Teilansicht des Gehäuses 14 gemäß Fig. 3 mit durch die Demontage der Verschlusselemente 40 in den Deckelsegmenten 39 des Gehäuses 14 freigegebenen Bypassöffnungen 37. Durch das Freigeben der beiden Bypassöffnungen 37 in den Deckelsegmenten 39 werden der Volumenstrom sowie die Strömungsgeschwindigkeit des die Siebe 10 durchströmenden Saugluftstroms 11 reduziert. Zugleich kann durch die Zuführung eines - durch Pfeile veranschaulichten - Bypassluftstroms 21 durch die beiden Bypassöffnungen 37 die Strömungsgeschwindigkeit im Sauggebläse 13 durch eine Erhöhung der Antriebsdrehzahl der Läufer 19a, 19b zunehmen. Der Bypassluftstroms 21 wird dabei außerhalb des Prozessraumes 17 angesaugt.

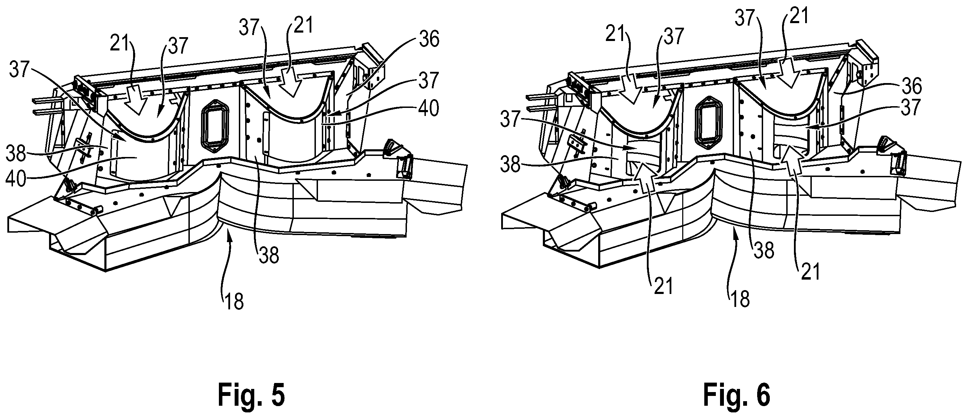

Fig. 5 zeigt schematisch und exemplarisch eine Ansicht des Gehäuses gemäß Fig. 3 mit durch das Entfernen der beiden Deckelsegmente 39, die als weitere Verschlusselemente 40 ausgeführt sind, freigegebenen Bypassöffnungen 37. Der Volumenstrom sowie die Strömungsgeschwindigkeit des die Siebe 10 durchströmenden Saugluftstroms 11 wird gegenüber der in Fig. 4 dargestellten Betriebssituation weiter reduziert. Der aufgrund der größeren Öffnungsweite der freigegebenen Bypassöffnungen 37 von den Saugebläsen 13 jeweils angesaugte Bypassluftstrom 21 nimmt weiter zu.

Die Darstellung in Fig. 6 zeigt schematisch und exemplarisch eine Ansicht des Gehäuses 14 gemäß Fig. 3 mit durch Entfernen der Deckelsegmente 39 und der Verschlusselemente 40 an den halbschalenförmigen Abschnitten 38 des Gehäuses 14 freigegebenen Bypassöffnungen 37. Hierdurch wird gegenüber der in Fig. 5 dargestellten Betriebssituation eine weitere Abnahme des Volumenstroms sowie der Strömungsgeschwindigkeit des die Siebe 10 durchströmenden Saugluftstroms 11 bewirkt und zugleich eine Erhöhung des jeweiligen von den Saugebläsen 13 angesaugten Bypassluftstroms 21.

Die Variation der Öffnungsweite der Bypassöffnungen 37 erfolgt im dargestellten Ausführungsbeispiel durch die manuelle Demontage bzw. Montage von an verschiedenen Stellen des Gehäuses 14 lösbar angeordneten Verschlusselementen 40.

Eine weitere Möglichkeit der Variation der Öffnungsweiten der Bypassöffnungen 37 besteht darin, Verschlusselemente 40 unterschiedlicher Größe vorzusehen, wie in Fig. 2 beispielhaft anhand der Ausführung der Deckelsegmente 39 als Verschlusselemente 40 dargestellt ist. Ebenso können die Verschlusselemente 40 an den halbschalenförmigen Abschnitten 38 des Gehäuses 14 ein an diesen angeordnetes kleineres Verschlusselement 40' aufweisen, welches von dem größeren Verschlusselement 40, an dem diese befestigt sind, lösbar sind, um die Öffnungsweiten der dadurch freigegeben Bypassöffnungen 37 zu variieren. Die Demontage erlaubt nur eine schrittweise oder stufenweise Veränderung der Öffnungsweiten der Bypassöffnungen 37. Bei einer schrittweisen Veränderung der Öffnungsweite der Bypassöffnungen 37 kann die Schrittweite, abhängig von der Größe der Verschlusselemente 40, gleichmäßig oder ungleichmäßig sein.

Für eine zum halbschalenförmigen Abschnitt 38 und/oder zum Deckelsegment 39 relativbewegliche Anordnung des zumindest einen Verschlusselementes 40 können beispielsweise zueinander parallele Führungsschienen auf der Oberseite des halbschalenförmigen Abschnitts 38 und/oder des Deckelsegmentes 39 angeordnet sein, die eine Verschiebung des zumindest einen Verschlusselementes 40 relativ zu diesen zur zumindest abschnittsfreien Freigabe der jeweiligen Bypassöffnung 37 ermöglichen. Die Verschiebung kann manuell oder automatisch durch einen Aktuator erfolgen. Eine weitere Alternative bildet die Verschlussblende, welche manuell oder durch einen Aktuator automatisch verstellbare Blendensegmente aufweist. Die Verschlussblende kann beispielsweise Lamellenblende ausgeführt sein, welche eine schrittweise oder kontinuierliche Veränderung der Öffnungsweite der zumindest einen Bypassöffnung 37 ermöglicht. Zur Ansteuerung kann der Mähdrescher 1 eine Steuereinheit aufweisen, um den jeweiligen Aktuator aus der Kabine heraus ansteuern zu können.

**Bezugszeichenliste**

| | | | |
|---|---|---|---|
| 1 | Mähdrescher | 33 | Führungsabschnitt |
| 2 | Dreschvorrichtung | 34 | Aktuator |
| 3 | Abscheidevorrichtung | 35 | Halterung |
| 4 | Reinigungsvorrichtung | 36 | Rückwand |
| 5 | Häckselvorrichtung | 37 | Bypassöffnung |
| 6 | Verteilvorrichtung | 38 | Halbschalenförmiger Abschnitt |
| 7 | Maschinengehäuse | 39 | Deckelsegment |
| 8 | Vorbereitungsboden | 40 | Verschlusselement |
| 9 | Rücklaufboden | 40' | Verschlusselement |
| 10 | Sieb | 41 | Schraubverbindung |
| 11 | Saugluftstrom | | |
| 12 | Sauggebläseanordnung | | |
| 13 | Sauggebläse | | |
| 14 | Gehäuse | | |
| 15 | Rotationsachse | | |
| 16 | Öffnung | | |
| 17 | Prozessraum | | |
| 18 | Auswurfkanal | | |
| 19a | Läufer | | |
| 19b | Läufer | | |
| 20 | Rotationsachse | | |
| 21 | Bypassluftstrom | | |
| 22 | Schaufel | | |
| 23 | Grundplatte | | |
| 24 | Abdeckung | | |
| 25 | Gutleitelement | | |
| 26 | Schwenkachse | | |
| 27 | Verstelleinrichtung | | |
| 28 | Äußerer Gelenkpunkt | | |
| 29 | Innerer Gelenkpunkt | | |
| 30 | Führungseinrichtung | | |
| 31 | Führungsbahn | | |
| 32 | Führungselement | | |

## Patentansprüche

1. Mähdrescher (1), umfassend eine Dreschvorrichtung (2), eine Abscheidevorrichtung (3) sowie eine Reinigungsvorrichtung (4), welche Siebe (10) sowie eine den Sieben (10) der Reinigungsvorrichtung (4) nachgeordnete Sauggebläseanordnung (12) mit zumindest einem Sauggebläse (13) aufweist, wobei die Sauggebläseanordnung (12) ein Gehäuse (14) aufweist, in welchem ein Läufer (19a, 19b) des zumindest einen Sauggebläses (13) um eine vertikale Rotationsachse (15) rotiert, um einen Saugluftstrom (11) aus einem zumindest die Reinigungsvorrichtung (4) umgebenden Prozessraum (17) des Mähdreschers (1) anzusaugen, welcher die Siebe (10) durchströmt, wobei die Sauggebläseanordnung (12) einen aus dem zumindest einen Sauggebläse (13) austretenden Luft- und Erntegutstrom einem Auswurfkanal (18) zuführt, **dadurch gekennzeichnet, dass** in einer dem Auswurfkanal (18) zugewandten Rückwand (36) des Gehäuses (14) zumindest eine Bypassöffnung (37) mit variabler Öffnungsweite integriert ist.

2. Mähdrescher (1) nach Anspruch 1, **dadurch gekennzeichnet, dass** jedem Sauggebläse (13) zumindest eine Bypassöffnung (37) zugeordnet ist.

3. Mähdrescher (1) nach Anspruch 1 oder 2, **dadurch gekennzeichnet, dass** die Öffnungsweite der zumindest einen Bypassöffnung (37) manuell oder automatisch veränderbar ist.

4. Mähdrescher (1) nach einem der Ansprüche 1 bis 3, **dadurch gekennzeichnet, dass** die zumindest eine Bypassöffnung (37) durch zumindest ein lösbar an der Rückwand (36) angeordnetes Verschlusselement (40, 40') und/oder durch zumindest eine an der Rückwand (36) angeordnete, relativ zur Rückwand (36) bewegliche Verschlussblende verschlossen ist.

5. Mähdrescher (1) nach einem der Ansprüche 1 bis 4, **dadurch gekennzeichnet, dass** die Rückwand (36) des Gehäuses (14) zumindest einen halbschalenförmigen Abschnitt (38) aufweist, welcher sich oberhalb des Auswurfkanals (18) in im Wesentlichen vertikaler Richtung erstreckt und das zumindest eine Sauggebläse (13) abschnittsweise in Umfangsrichtung umgibt, und ein sich an den halbschalenförmigen Abschnitt (38) anschließendes Deckelsegment (39), welches gegenüber der Rotationsachse (15) des Sauggebläses (13) geneigt ausgeführt ist und sich abschnittsweise oberhalb des Sauggebläses (13) über dieses erstreckt.

6. Mähdrescher (1) nach Anspruch 5, **dadurch gekennzeichnet, dass** die zumindest eine Bypassöffnung (37) in dem zumindest einen Deckelsegment (39) der Rückwand (36) des Gehäuses (14) ausgebildet ist.

7. Mähdrescher (1) nach Anspruch 5 oder 6, **dadurch gekennzeichnet, dass** die zumindest eine Bypassöffnung (37) in dem zumindest einen halbschalenförmigen Abschnitt (38) der Rückwand (36) des Gehäuses (14) ausgebildet ist.

8. Mähdrescher (1) nach einem der Ansprüche 5 bis 7, **dadurch gekennzeichnet, dass** das zumindest eine Verschlusselement (40) lösbar an dem Deckelsegment (39) oder zum Deckelsegment (39) relativbeweglich angeordnet ist, um die Öffnungsweite zu variieren.

9. Mähdrescher (1) nach Anspruch 8, **dadurch gekennzeichnet, dass** das zumindest eine Verschlusselement (40) durch Befestigungsmittel, insbesondere Schraubverbindungen (41), mit dem Deckelsegment (39) lösbar verbunden ist.

10. Mähdrescher (1) nach Anspruch 8, **dadurch gekennzeichnet, dass** das zumindest eine zum Deckelsegment (39) relativbeweglich angeordnete Verschlusselement (40) manuell oder durch eine Aktuatorik automatisch bewegbar ist.

11. Mähdrescher (1) nach einem der Ansprüche 8 bis 10, **dadurch gekennzeichnet, dass** das zumindest ein Verschlusselement (40) umfassende Deckelsegment (39) gemeinsam mit dem zumindest einen Verschlusselement (40) von dem halbschalenförmigen Abschnitt (38) lösbar ist.

12. Mähdrescher (1) nach einem der Ansprüche 5 bis 11, **dadurch gekennzeichnet, dass** das zumindest eine Verschlusselement (40) lösbar an dem zumindest einen halbschalenförmigen Abschnitt (38) oder zum zumindest einen halbschalenförmigen Abschnitt (38) relativbeweglich angeordnet ist, um die Öffnungsweite zu variieren.

13. Mähdrescher (1) nach einem der Ansprüche 4 bis 12, **dadurch gekennzeichnet, dass** auf dem zumindest einen Verschlusselement (40) ein weiteres Verschlusselement (40') lösbar angeordnet ist, welches eine kleinere Oberfläche aufweist.
